# EUROPÄISCHE PATENTSCHRIFT

(11) **EP 2 745 300 B1**
(45) Veröffentlichungstag und Bekanntmachung des Hinweises auf die Patenterteilung: **20.01.2016**
(21) Anmeldenummer: 12743426.4
(22) Anmeldetag: 24.07.2012
(51) Int. Cl.: H01G 4/32, H01G 4/38, H01G 4/224, H01G 2/08

(54) **KONDENSATOR MIT EINEM KÜHLKÖRPER**
CAPACITOR HAVING A HEAT SINK
CONDENSATEUR COMPRENANT UN CORPS DE REFROIDISSEMENT

(30) Priorität: 19.08.2011 DE 102011081283
(43) Veröffentlichungstag der Anmeldung: 25.06.2014
(73) Patentinhaber: Robert Bosch GmbH, 70442 Stuttgart (DE)
(72) Erfinder: LUBINA, Zeljko, 72762 Reutlingen (DE); GESELLMANN, Matthias, 72770 Reutlingen (DE); WOLFF, Markus, 72555 Metzingen (DE); MINARSCH, Juergen, 73061 Ebersbach (DE)
(86) Internationale Anmeldenummer: PCT/EP2012/064543
(87) Internationale Veröffentlichungsnummer: WO 2013/026645

(56) Entgegenhaltungen:
- EP-A1- 1 729 311
- DE-C1- 19 725 843
- JP-A- 6 104 143

## Beschreibung

### Stand der Technik

Die Erfindung betrifft einen Kondensator, insbesondere Elektrolytkondensator. Der Kondensator weist einen Gehäusebecher auf.

Im Dokument D1 (DE 19725843 C1) wird ein elektrischer Kondensator beschrieben, der in ein Gehäuse mit ebenem Gehäuseboden eingebaut ist. Der Kondensator ist in einer Vertiefung eines Kühlelements angeordnet. Zur Fixierung des Kondensators dienen Befestigungsstifte, die in seitlich am Kühlelement angeordneten Bohrungen geführt sind.

### Offenbarung der Erfindung

Die Erfindung ist durch die Merkmale des unabhängigen Anspruchs 1 definiert. Erfindungsgemäß ist der Kondensator mit einem Kühlkörper derart verbunden, dass von dem Kondensator erzeugte Wärme an den Kühlkörper abgegeben werden kann. Der Kühlkörper weist bevorzugt eine Ausnehmung auf, in welcher der Kondensator wenigstens teilweise, bevorzugt der Gehäusebecher vollständig, aufgenommen ist. Der Kondensator, insbesondere der Gehäusebecher, ist in der Ausnehmung mit dem Kühlkörper wenigstens wärmeleitend verbunden.

Dadurch kann der Kondensator, insbesondere Elektrolytkondensator, vorteilhaft platzsparend in einem Kühlkörper angeordnet sein. Beispielsweise wird der Elektrolytkondensator bei Hochstromanwendungen mit einem als Stanzgitter ausgebildeten Schaltungsträger elektrisch kontaktiert und von dem Schaltungsträger auch mechanisch festgehalten. In einer solchen Ausführungsform kann vorteilhaft ein Teil des Stanzgitters, welcher den Elektrolytkondensator hält, entfallen.

Der Kondensator ist in einer anderen Ausführungsform ein Wickelkondensator oder ein Doppelschichtkondensator. Der Doppelschichtkondenstor umfasst bevorzugt wenigstens ein Doppelschicht-Elektrodenpaar, welches weiter bevorzugt zusätzlich als Redox-Elektrodenpaar ausgebildet ist.

Bevorzugt ist der Kühlkörper elektrisch leitfähig ausgebildet, und der Elektrolytkondensator, insbesondere der Gehäusebecher in der Ausnehmung mit dem Kühlkörper elektrisch verbunden. Dadurch kann vorteilhaft ein Teil des Stanzgitters, insbesondere ein Teil, welcher eine elektrische Verbindung zum Kontaktieren eines elektrischen Anschlusses, bevorzugt eines Minuspols des Elektrolytkondensators, entfallen. Weiter vorteilhaft braucht der Elektrolytkondensator an dem Gehäusebecher keinen dort angeschweißten Anschlussdraht zum elektrischen Anschließen eines Pols, insbesondere Minuspols des Elektrolytkondensators aufweisen. In dem Gehäusebecher ist bevorzugt wenigstens eine Elektrode des Kondensators, insbesondere eine Wickelelektrode aufgenommen, welche ausgebildet ist, elektrische Ladungen aufzunehmen, zu speichern und wieder abzugeben. Die Wickelelektrode, im Folgenden auch Wickel genannt, ist von dem Gehäusebecher vor äußeren Einflüssen geschützt umgeben.

Der Gehäusebecher weist beispielsweise Aluminium auf, bevorzugt ist der Gehäusebecher aus einer Aluminiumlegierung gebildet. Der Gehäusebecher ist beispielsweise mittels Fließpressen erzeugt.

Der Kühlkörper weist beispielsweise Aluminium auf, bevorzugt ist der Kühlkörper aus einer Aluminiumlegierung gebildet. Der Kühlkörper ist beispielsweise mittels Gießen, insbesondere Druckgießen erzeugt. Die Ausnehmung im Kühlkörper ist beispielsweise gebohrt, gefräst oder beim Gießen ausgeformt.

Erfindungsgemäß ist der Elektrolytkondensator in die Ausnehmung eingepresst, dass zwischen wenigstens einem Teil des Gehäusebechers und einer Wand der Ausnehmung des Kühlkörpers eine wärmeleitende, zusätzlich elektrisch leitende Verbindung erzeugt ist. In einer bevorzugten Ausführungsform ist die Ausnehmung wenigstens auf einem Abschnitt nach innen sich verjüngend, insbesondere konisch verlaufend ausgebildet. Dadurch kann der Gehäusebecher vorteilhaft im Bereich der Konizität der Ausnehmung komprimiert werden und so kraftschlüssig festgehalten werden.

Erfindungsgemäß weist der Elektrolytkondensator wenigstens auf einem zum Einpressen ausgebildeten Abschnitt radial abweisende, bevorzugt sich entlang der Längsachse erstreckende Rippen auf, welche ausgebildet sind, den Kühlkörper im Bereich der Ausnehmung wärmeleitend oder zusätzlich elektrisch zu kontaktieren und den Elektrolytkondensator in der Ausnehmung insbesondere federnd festzuklemmen. Die Rippen werden dabei vorteilhaft radial nach innen komprimiert. Bevorzugt ist der Gehäusebecher von Elektroden, insbesondere einem Wickel des Elektrolytkondensators im Innern beabstandet. Bevorzugt ist der Gehäusebecher von dem Wickel des Elektrolytkondensators derart beabstandet, dass beim Komprimieren des zuvor erwähnten Abschnitts, insbesondere Längsabschnitts des Gehäusebechers der Wickel nicht beschädigt werden kann. Durch die Rippen ist vorteilhaft ein zum Komprimieren ausgebildeter Bereich gebildet, wobei die Rippen bevorzugt ausgebildet sind, beim Einpressen des Elektrolytkondensators in die Ausnehmung stärker komprimiert zu werden als eine Wand des Gehäusebechers zu einem eine Elektrode des Kondensators bildenden Wickel hin.

Bevorzugt erstreckt sich der Bereich des Gehäusebechers, welcher zum thermischen oder zusätzlich elektrischen Kontaktieren der Ausnehmung ausgebildet ist, zwischen einer ringförmig umlaufenden Nut des Gehäusebechers und einem Boden des Gehäusebechers. Dadurch kann vorteilhaft Wärme aus der ringförmig ausgebildeten Nut, welche im Inneren wenigstens einen Wickel des Elektrolytkondensators berührt, in den Bereich des Gehäusebechers abgeführt werden, welcher mit der Ausnehmung in thermisch leitender Wirkverbindung steht.

Unabhängig oder zusätzlich zu dem zuvor erwähnten am Gehäusebecher des Elektrolytkondensators ausgebildeten Rippen kann der Kühlkörper in der Ausnehmung ausgeformte, sich bevorzugt längserstreckende Rippen aufweisen, wobei die Rippen ausgebildet sind, den Gehäusebecher kraftschlüssig, insbesondere klemmend und zusätzlich federnd festzuhalten. Dadurch kann vorteilhaft ein Flächenbereich des Gehäusebechers mittels der Rippen leicht eingedrückt werden, wobei die Rippen bevorzugt ausgebildet sind, beim Einpressen des Gehäusebechers des Elektrolytkondensators Verschmutzung oder zusätzlich eine Oxidschicht zu durchschaben und den Elektrolytkondensator, insbesondere den Gehäusebecher des Elektrolytkondensators sicher elektrisch kontaktieren. Die Rippen weisen bevorzugt wenigstens eine sich längserstreckende Schneide auf, welche ausgebildet ist, in den Gehäusebecher des Elektrolytkondensators beim Einpressen des Gehäusebechers einzuschneiden und den Gehäusebecher dort sicher elektrisch zu kontaktieren.

In einer anderen vorteilhaften Ausführungsform weist der Gehäusebecher ein Gewinde auf, so dass der Elektrolytkondensator in die Aussparung eingeschraubt werden kann. Dadurch ist der Gehäusebecher formschlüssig in der Aussparung gesichert. Zusätzlich ist ein guter elektrischer Kontakt im Bereich des Gewindes hergestellt, da von dem Gewinde eine Oxidschicht am Gewinde selbst oder zusätzlich in der Aussparung beim Einschrauben durchbrochen werden kann.

In einer bevorzugten Ausführungsform ist der Elektrolytkondensator mittels eines Klemmrings in der Ausnehmung festgehalten. Dadurch kann vorteilhaft ein Elektrolytkondensator Anwendung finden, welcher keine Rippen aufweisen braucht. Der Elektrolytkondensator weist in dieser Ausführungsform beispielsweise einen Gehäusebecher auf, welcher wenigstens im Bereich des wärmeleitenden Kontaktes mit der Ausnehmung zylinderförmig und glatt ausgebildet ist.

Mittels des Klemmrings können vorteilhaft gewöhnliche Elektrolytkondensatoren mit einem Gehäusebecher mit dem Kühlkörper verbunden werden, wobei beispielsweise ein Anschlussdraht, welcher mit dem Gehäusebecher verbunden ist, vor einem Einfügen in die Ausnehmung abgeschnitten werden kann. Die Ausnehmung ist bevorzugt durch ein zylinderförmiges Sackloch gebildet. Das Sackloch kann beispielsweise im Bereich eines Bodens eine Vertiefung oder Mulde aufweisen, in die ein Rest eines abgeschnittenen Anschlussdrahtes wenigstens teilweise eingeführt werden kann. Dadurch kann ein Boden des Gehäusebechers nicht beim Einpressen verformt werden, da der Rest des Anschlussdrahtes einen Boden der Ausnehmung nicht berühren kann.

In einer bevorzugten Ausführungsform ist der Klemmring auf einer Mantelfläche des Klemmrings zu einem Ende hin verjüngt, insbesondere konisch ausgebildet. Der Elektrolytkondensator kann so vorteilhaft zusammen mit dem verjüngt oder konisch ausgebildeten Klemmring in eine zuvor beschriebene sich zu einem Boden des Sacklochs hin verjüngende Ausnehmung eingepresst werden.

In einer bevorzugten Ausführungsform ist der Klemmring in Umfangsrichtung wellenförmig und insbesondere zu einer Längsachse des Kondensators radial federnd ausgebildet. Der Gehäusebecher weist wenigstens auf einem Umfangsabschnitt eine Nut auf, wobei die Nut ausgebildet ist, den Klemmring wenigstens teilweise aufzunehmen, sodass der Klemmring in die Nut federnd eingreifen kann. Durch den Klemmring kann der Gehäusebecher vorteilhaft formschlüssig in der Ausnehmung festgehalten werden. Der Klemmring ist bevorzugt ausgebildet, mit einer radial abweisenden Welle in eine Nut der Ausnehmung federnd eingreifen. Die Ausnehmung kann dazu vorteilhaft eine radial umlaufende Ringnut aufweisen, welche zum Eingriff des Klemmrings ausgebildet ist. Auf diese Weise kann der Klemmring vor einem Einfügen des Elektrolytkondensators in die Ausnehmung über den Gehäusebecher geschoben werden, bis der Klemmring mit wenigstens einem bevorzugt wellenförmig radial nach innen weisenden Ringumfangsabschnitt in die zuvor beschriebene Nut des Gehäusebechers einschnappt. Der Gehäusebecher kann dann zusammen mit dem wellenförmigen Klemmring in die Ausnehmung eingefügt werden. Im Falle einer ringförmig umlaufenden Nut in der Ausnehmung kann der Klemmring mit einem radial nach außen weisenden Umfangsabschnitt in die Nut der Ausnehmung einrasten. Der Gehäusebecher ist so kraftschlüssig und zusätzlich formschlüssig in der Ausnehmung festgehalten.

In einer bevorzugten Ausführungsform weist der Klemmring wenigstens eine Federlasche auf, welche ausgebildet ist, gegen den Gehäusebecher und/oder eine Wand der Ausnehmung federnd abzustützen. Dazu kann der Klemmring beispielsweise radial nach außen weisende, und/oder radial nach innen weisende Federlaschen aufweisen. Vorteilhaft weisen die Federlaschen jeweils eine Schneide auf, wobei die Schneide ausgebildet ist, beim Einführen des Gehäusebechers in den Klemmring schabend in eine Oberfläche des Gehäusebechers einzugraben. Die Federlaschen, welche radial abweisen können beispielsweise schabend in die Wand der Ausnehmung eingreifen. Vorteilhaft erstrecken sich die radial abweisenden Federlaschen zu einer Öffnung der Ausnehmung hin, sodass beim Bewegen des Gehäusebechers in Richtung der Öffnung die Federlaschen mit den zuvor erwähnten Schneiden in die Wand der Ausnehmung einschneiden. Auf diese Weise ist eine Art Widerhaken gebildet, welcher ein wieder herausziehen des Elektrolytkondensators, beispielsweise durch Vibrationen oder Erschütterungen, verhindert. Die Federlaschen, welche radial nach innen weisen, weisen bevorzugt mit einer Richtungskomponente zu dem Boden des Gehäusebechers hin, sodass bei einer Kraft auf den Gehäusebecher, die gerichtet ist den Gehäusebecher aus der Öffnung herauszubewegen, die Federlaschen in die Oberfläche des Gehäusebechers einschneiden und wie zuvor beschrieben nach Art eines Widerhakens ein Herausbewegen des Gehäusebechers aus dem Klemmring verhindern.

In einer bevorzugten Ausführungsform ist der Gehäusebecher in der Ausnehmung mit einem mindestens wärmeleitfähigen, oder zusätzlich elektrisch leitfähigen Medium, insbesondere einem Klebstoff, einer Paste oder einem Gel, in die Ausnehmung eingefügt, im Falle des Klebstoffs eingeklebt. Durch das Medium kann vorteilhaft ein guter Wärmeübergangswiderstand vom Gehäusebecher zu der Wand der Ausnehmung gebildet sein. Der Klebstoff ist beispielsweise durch ein Harz, insbesondere ein Acrylharz oder ein Epoxidharz gebildet. Das Harz kann beispielsweise mittels Ultraviolettstrahlung oder mittels einer radialhaltigen Startersubstanz zum Aushärten, insbesondere Auspolymerisieren gebracht werden. Der elektrisch leitfähige Klebstoff kann beispielsweise elektrisch leitfähige Partikel aufweisen, deren Anteil und Partikeldurchmesser im Klebstoff derart ausgebildet ist, dass zwischen dem Gehäusebecher und dem Kühlkörper im Bereich der Ausnehmung eine ununterbrochen elektrisch und wärmeleitfähige Kette von elektrisch leitfähigen Partikeln gebildet ist, wobei die elektrisch leitfähigen Partikel als Bestandteil der Kette einander berührend kontaktieren. Die Partikel sind beispielsweise Silberpartikel oder Kohlenstoffpartikel, insbesondere Carbonfaserabschnitte oder Carbon-Nanoröhrchen.

Die Erfindung wird nun im Folgenden anhand von Figuren und weiteren Ausführungsbeispielen beschrieben. Weitere vorteilhafte Ausführungsvarianten ergeben sich aus den in den abhängigen Ansprüchen und in den Figuren genannten Merkmalen.
Figur 1 zeigt schematisch ein Ausführungsbeispiel für einen Elektrolytkondensator, welcher in einer Ausnehmung eines Kühlkörpers angeordnet ist und von Rippen des Kühlkörpers in der Ausnehmung kontaktiert wird;
Figur 2 zeigt schematisch den in Figur 1 dargestellten Elektrolytkondensator in einem Querschnitt;
Figur 3 zeigt schematisch ein Einpressen des in Figur 1 dargestellten Elektrolytkondensators in die Ausnehmung mittels eines Presswerkzeugs;
Figur 4 zeigt schematisch einen in der Ausnehmung eines Kühlkörpers mittels eines Klemmrings festgehaltenen Kondensators;
Figur 5 zeigt schematisch den in Figur 4 dargestellten Kondensator in einem Querschnitt;
Figur 6 zeigt schematisch einen in der Ausnehmung eines Kühlkörpers mittels eines längsgerippten Klemmrings festgehaltenen Kondensators;
Figur 7 zeigt schematisch den in Figur 6 dargestellten Kondensator in einem Querschnitt;
Figur 8 zeigt schematisch einen in der Ausnehmung eines Kühlkörpers mittels eines konisch ausgebildeten Klemmrings festgehaltenen Kondensators;
Figur 9 zeigt schematisch den in Figur 8 dargestellten Kondensator in einem Querschnitt;
Figur 10 zeigt schematisch einen in der Ausnehmung eines Kühlkörpers mittels eines Klemmrings mit Federlaschen festgehaltenen Kondensators;
Figur 11 zeigt schematisch den in Figur 10 dargestellten Kondensator in einem Querschnitt;
Figur 12 zeigt schematisch einen in der Ausnehmung eines Kühlkörpers mittels eines wellenförmigen Klemmrings festgehaltenen Kondensators;
Figur 13 zeigt schematisch den in Figur 12 dargestellten Kondensator in einem Querschnitt;
Figur 14 zeigt schematisch einen in der Ausnehmung eines Kühlkörpers mittels eines mehrere Federbügel aufweisenden Klemmrings festgehaltenen Kondensators;
Figur 15 zeigt eine Variante des in Figur 14 dargestellten Klemmrings in einer Aufsicht;
Figur 16 zeigt schematisch den in Figur 14 dargestellten Kondensator in einem Querschnitt;
Figur 17 zeigt einen Elektrolytkondensator der mittels einer Tellerfeder in einer Aussparung eines Kühlkörpers mit dem Kühlkörper verbunden ist;
Figur 18 zeigt die in Figur 17 dargestellte Tellerfeder teilweise in einer Aufsicht;
Figur 19 zeigt einen Elektrolytkondensator der mittels eines wärmeleitfähigen und zusätzlich elektrisch leitfähigen Klebstoffs in einer Aussparung eines Kühlkörpers mit dem Kühlkörper verbunden ist;
Figur 20 zeigt ein Ausführungsbeispiel für einen Elektrolytkondensator mit einem Gehäusebecher mit Rippen, die über einen Längsabschnitt des Gehäusebechers eine Art Zahnrad bilden;
Figur 21 zeigt ein Ausführungsbeispiel für einen Elektrolytkondensator mit einem Gehäusebecher mit einem Gewinde zum Einschrauben des Elektrolytkondensators in eine Aussparung eines Kühlkörpers.

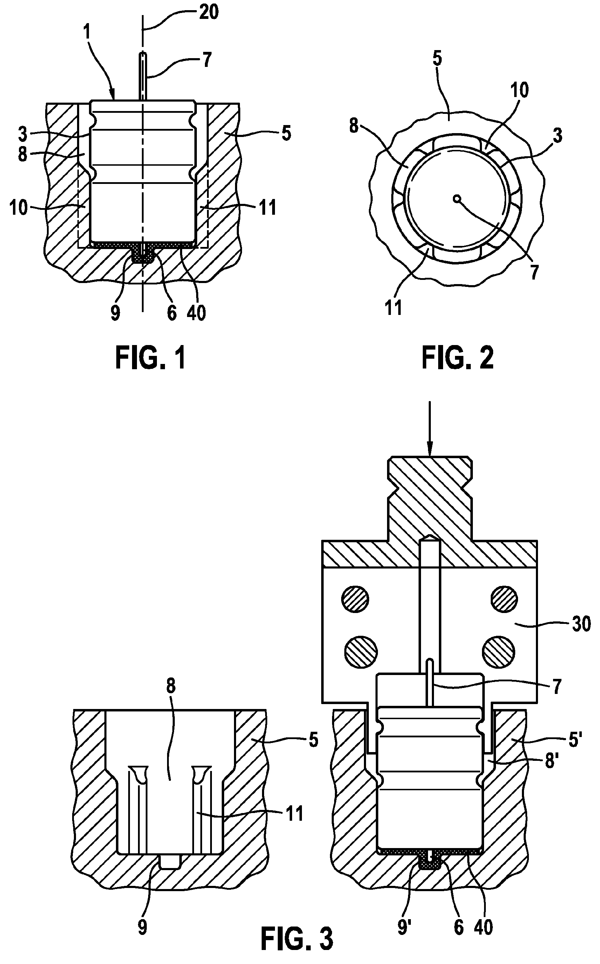

Figur 1 zeigt ein Ausführungsbeispiel für einen Elektrolytkondensator 1, welcher in einer Ausnehmung 8 eines Kühlkörpers 5 angeordnet ist. Der Elektrolytkondensator 1 weist einen Anschluss 7 auf, welcher im Inneren des Elektrolytkondensators 1 mit einer positiven Elektrode des Elektrolytkondensators 1 verbunden ist. Der Elektrolytkondensator 1 weist auch einen in diesem Ausführungsbeispiel zylinderförmig ausgebildeten Gehäusebecher 3 auf, welcher im Inneren des Elektrolytkondensators 1 mit einer negativen Elektrode des Elektrolytkondensators 1 verbunden ist. Die Ausnehmung 8 des Kühlkörpers 5 ist in diesem Ausführungsbeispiel hohlzylinderförmig ausgebildet. Der Kühlkörper 5 weist radial umlaufend an einer Wand der Ausnehmung sich radial nach innen erstreckende Rippen auf. Die Rippen 10 und 11 sind beispielhaft bezeichnet. Der Elektrolytkondensator 1 weist in diesem Ausführungsbeispiel am Boden des Gehäusebechers 3 einen abgeschnittenen Anschluss 6 auf, welcher sich - wie der Anschluss 7 entlang einer Längsachse 20 des Elektrolytkondensators 1 erstreckt. Die Rippen 10 und 11 erstrecken sich jeweils in Richtung einer Tiefe der Ausnehmung 8 bis hin zu einem Boden der Ausnehmung 8, welche in diesem Ausführungsbeispiel als Sackloch ausgebildet ist. Am Boden der Ausnehmung 8 weist der Kühlkörper 5 eine weitere Vertiefung 9 auf, welche ausgebildet ist, den nach dem Abschneiden des Anschlussdrahtes des Gehäusebechers 3 verbleibenden Anschlussrest 6 aufzunehmen, nachdem der Kondensator 1 in die Ausnehmung 8 eingeschoben wurde.

Ein Boden des Gehäusebechers 3 gerät nach dem Einschieben des Kondensators 1 in die Ausnehmung 8 mit dem Boden der Ausnehmung 8 in wärmeleitenden Wirkkontakt. Der Gehäusebecher 3 steht auch im Bereich der Rippen mit dem Gehäusebecher 3, insbesondere einer Außenwand des Gehäusebechers 3 auf dem Längsabschnitt, über den sich die Rippen - in Richtung der Längsachse 20 - erstrecken, in wärmeleitendem Wirkkontakt. So kann Wärme sowohl über die Rippen als auch über den Boden der Ausnehmung 8 von dem Gehäusebecher 3 in den Kühlkörper 5 geleitet werden.

Zusätzlich zu dem bereits beschriebenen Kontakt zwischen dem Boden des Gehäusebechers 3 und dem Boden der Ausnehmung 8 durch Berühren kann zwischen dem Boden des Gehäusebechers 3 und dem Boden der Ausnehmung 8 ein Wärmeleitmittel 40, zuvor auch wärmeleitfähiges Medium genannt, angeordnet sein. Das Wärmeleitmittel ist beispielsweise eine Wärmeleitpaste oder ein wärmeleitfähiger oder zusätzlich elektrisch leitfähiger Klebstoff. Mittels des Wärmeleitmittels 40 kann ein zwischen dem Boden des Gehäusebechers 3 und dem Boden der Ausnehmung 8 befindlicher Luftspalt überbrückt werden. Der Gehäusebecher 3 des Kondensators 1 kann sich vorteilhaft bei thermischen Ausdehnungen in Hohlräume zwischen den Rippen hinein expandieren. Der Gehäusebecher 3 wird auch in dieser Ausführungsform vorteilhaft nur im Bereich der Rippen während eines Einpressens leicht eingedrückt und federnd festgehalten.

Figur 2 zeigt den in Figur 1 bereits in einer Längsschnittdarstellung dargestellten Kondensator 1 in einer Querschnittdarstellung. Dargestellt ist der positive Anschlussdraht 7, der Gehäusebecher 3 und die Ausnehmung 8 des Kühlkörpers 5. Dargestellt sind auch die in Figur 1 bereits gezeigten sich längserstreckenden Rippen 10 und 11. Die Rippen 10 und 11 erstrecken sich jeweils entlang eines Abschnitts einer Tiefenabmessung der Ausnehmung 8. So kann der Kondensator 1 in die Ausnehmung 8 entlang der Längsachse 20 eingeführt werden, bis ein Rand des Bodens des Gehäusebechers 3 die Rippen, insbesondere zu einer Öffnung der Ausnehmung 8 hingewandte Begrenzung der Rippen berührt. Zum weiteren Einschieben des Kondensators 1 ist dann eine Einpresskraft erforderlich, durch welche die Rippen in den Gehäusebecher eindrücken und den Gehäusebecher 3 so kraftschlüssig entlang der Längsachse 20 festhalten.

Figur 3 zeigt den in Figur 1 und in Figur 2 bereits dargestellten Kondensator 1, welcher von einem Einpresswerkzeug 30 in eine Ausnehmung des Kühlkörpers 5 eingepresst worden ist. Das Einpresswerkzeug 30 umgreift dabei den Gehäusebecher 3 des Kondensators 1 im Bereich des Anschlusses 7 und greift in eine in einer Becherwand des Gehäusebechers gebildete Vertiefung, insbesondere eine umlaufend ausgebildete Nut ein. Dargestellt ist die in Figur 2 bereits gezeigte Ausnehmung 8, die Rippe 11, und die Vertiefung 9.

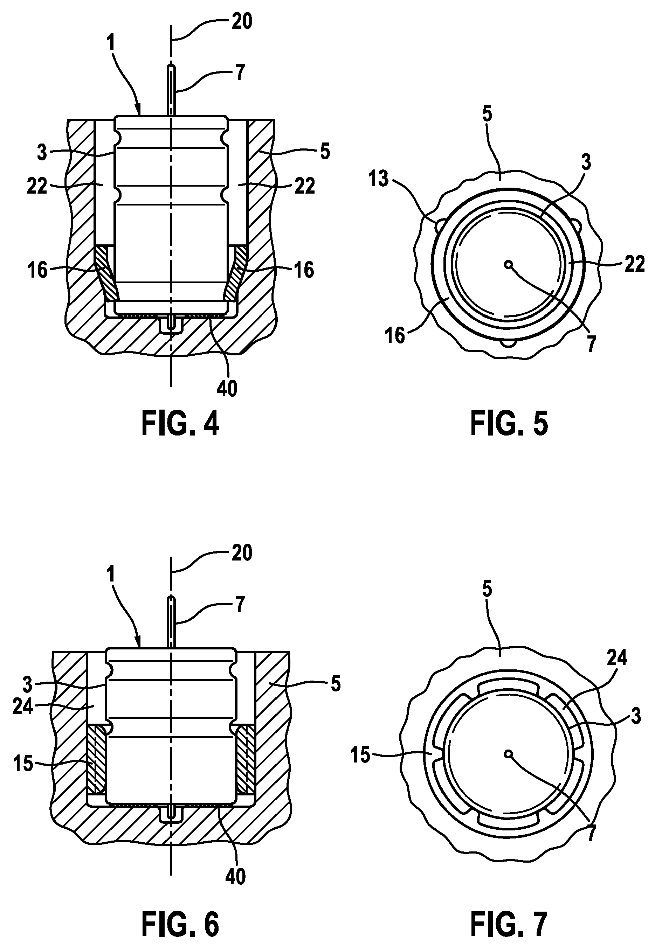

Figur 4 zeigt ein Ausführungsbeispiel, bei dem der in Figur 1 bereits dargestellte Kondensator 1 umfassend den Gehäusebecher 3 und den Anschluss 7 in eine Ausnehmung 22 eines Kühlkörpers 5 eingefügt ist. Die Ausnehmung 22 ist in diesem Ausführungsbeispiel entlang eines Tiefenabschnitts beginnend von einer Öffnung der Ausnehmung 22 zylinderförmig ausgebildet. Die Ausnehmung 22 ist im weiteren Verlauf entlang einer Tiefenerstreckung sich verjüngend ausgebildet. Ein Durchmesser der Ausnehmung 22 am Boden der Ausnehmung 22 ist größer als ein Durchmesser des Gehäusebechers 3 des Kondensators 1, sodass sich der Kondensator 1 zunächst ohne weitere Einpresskräfte in die Ausnehmung 22 einfügen lässt. Nach einem Einfügen des Kondensators 1 in die Ausnehmung 22 kann ein Klemmring 16, welcher in diesem Ausführungsbeispiel als Rohrabschnitt ausgebildet ist, in die Ausnehmung 22 eingepresst werden. Der Klemmring 16 verformt sich dabei in der Ausnehmung durch die zuvor beschriebene zunehmende Verjüngung und die so gebildete Konizität der Ausnehmung zum Boden hin. Der Klemmring 16 drückt dabei auch in den Gehäusebecher 3 auf einem Längsabschnitt der Verjüngung der Ausnehmung 22 ein und sichert den Kondensator 1 so formschlüssig gegen ein Herausbewegen aus der Ausnehmung 22 entlang einer Längsachse 20 des Kondensators 1.

Figur 5 zeigt den in Figur 4 bereits dargestellten Kondensator 1 in der Ausnehmung 22. Die Ausnehmung 22 weist in diesem Ausführungsbeispiel im Bereich der Tiefenabmessung sich entlang der Tiefe erstreckende Nuten auf. Die Nut 13 ist beispielhaft bezeichnet. Die Nuten bewirken, dass beim Einpressen des Klemmrings 16 Luft, welche durch den Klemmring 16 komprimiert werden würde, durch die Nuten entweichen kann.

Figur 6 zeigt ein Ausführungsbeispiel für einen Kühlkörper 5 mit einer Ausnehmung 24, welche in diesem Ausführungsbeispiel zylinderförmig ausgebildet ist. In der Ausnehmung 24 ist der in Figur 1 bereits beschriebene Kondensator 1 umfassend den Gehäusebecher 3 und den Anschluss 7 vollständig aufgenommen. Die Ausnehmung 24 weist einen größeren Durchmesser auf als der Gehäusebecher 3 des Kondensators 1. Dadurch lässt sich der Kondensator 1 ohne zusätzliche Einpresskraft in die Ausnehmung 24 einfügen. Zwischen einer Außenwand des Gehäusebechers 3 und einer Innenwand der Ausnehmung 24 ist entlang einem Längsabschnitt der Ausnehmung 24 - in Tiefenerstreckung der Ausnehmung 24 - ein Klemmring 15 angeordnet. Der Klemmring 15 ist nach einem Einfügen des Kondensators 1 in die Ausnehmung 24 zwischen dem Gehäusebecher 3 und die Innenwand der Ausnehmung 24 eingepresst worden. Der Klemmring 15 ist ausgebildet, den Gehäusebecher 3 wärmeleitend zu berühren oder zusätzlich einzupressen und Wärme von dem Gehäusebecher 3 an den Kühlkörper 5 über die Innenwand der Ausnehmung 24 zu leiten. Der Gehäusebecher 3 kann - wie bereits in Figur 1 dargestellt - im Bereich eines Bodens mit einem Boden der Ausnehmung 24 in thermisch leitfähigem Wirkkontakt stehen. Dazu kann zusätzlich zu einem Berühren des Bodens des Gehäusebechers 3 mit dem Kühlkörper 5 ein Wärmeleitmittel 40 zwischen dem Boden des Gehäusebechers und einem Boden der Ausnehmung 24 angeordnet sein.

Figur 7 zeigt den in Figur 6 bereits in einer Längsschnittdarstellung dargestellten Kondensator 1 in der Ausnehmung 24 in einer Querschnittdarstellung. Dargestellt sind der Gehäusebecher 3, der Anschluss 7, die Ausnehmung 24 und der Klemmring 15. Der Klemmring 15 weist eine radial nach außen weisende, umlaufende glatte Begrenzung auf, welche mit der zuvor beschriebenen Innenwand der Ausnehmung 24 glatt abschließt. Der Klemmring 15 weist radial nach innen weisende sich längserstreckende Rippen auf, welche wie zuvor bereits in den Figuren 1, 2 und 3 beschrieben ausgebildet sein können. Die Rippen des Klemmrings 15 sind ausgebildet, beim Einpressen des Klemmrings 15 die Gehäusewand des Gehäusebechers 3 auf einem Längsabschnitt des Kondensators 1 einzupressen und so federnd kraftschlüssig festzuhalten. Die Rippen des Klemmrings 15 sind weiter ausgebildet, den Gehäusebecher 3 im Bereich der Berührungsstellen wärmeleitend oder zusätzlich elektrisch zu kontaktieren, und von dem Gehäusebecher 3 aufgenommene Wärme an den Kühlkörper 5 über die Innenwand abzugeben.

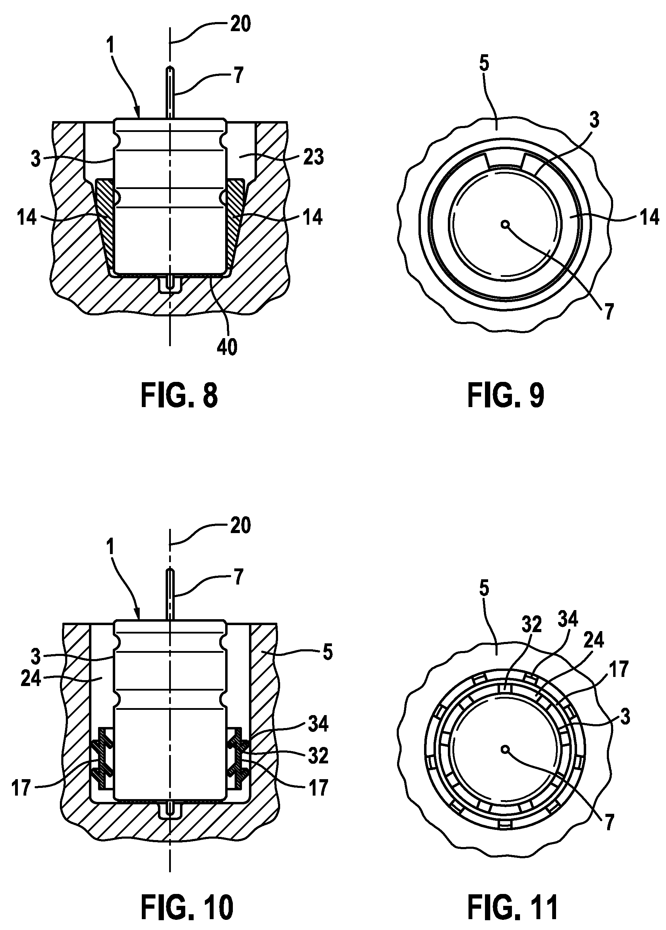

Figur 8 zeigt ein Ausführungsbeispiel für eine Ausnehmung 23 in einem Kühlkörper 5. Die Ausnehmung 23 ist von einer Öffnung an beginnend entlang eines Tiefenabschnitts der Ausnehmung 23 zylinderförmig ausgebildet. Die Ausnehmung 23 ist im weiteren Verlauf entlang der Tiefe bis hin zu einem Boden konisch mit zum Boden hin abnehmendem Durchmesser ausgebildet. Der Durchmesser der Ausnehmung 23 ist in diesem Ausführungsbeispiel am Boden größer als der Durchmesser des Gehäusebechers 3 am Boden des Kondensators 1. Dadurch lässt sich der Kondensator 1 ohne zusätzliche Einpresskräfte in die Ausnehmung 23 einführen. Der Kondensator 1 wird in einem weiteren Schritt mit einem Klemmring 14 in der Ausnehmung 23 festgeklemmt. Der Klemmring 14 ist dazu an einer Innenwand zylinderförmig ausgebildet, sodass der- in diesem Ausführungsbeispiel zylinderförmig ausgebildete - Gehäusebecher 3 nach einem Einführen des Klemmrings 14 in die Ausnehmung und einem Überstülpen über den Kondensator 1 von der Innenwand des Klemmrings 1 thermisch und zusätzlich elektrisch leitend kontaktiert werden kann. Der Klemmring 14 weist einen entlang einer Längserstreckung entlang der Längsachse 20 des Klemmrings sich verringernden Außendurchmesser auf. Dadurch ist eine Außenwand des Klemmrings 14 kreiskegelförmig gebildet. Zusätzlich zu der Wärmeleitung von dem Gehäusebecher 3 über den Klemmring 14 an den Kühlkörper 5 kann der Boden des Gehäusebechers 3 - wie bereits zuvor beschrieben - mittels eines Wärmeleitmittels 40 an einem Boden der Ausnehmung 23 wärmeleitend angebunden sein.

Figur 9 zeigt den bereits in Figur 8 in einem Längsschnitt dargestellten Kondensator 1 in einer Querschnittdarstellung. Dargestellt sind der Gehäusebecher 3 und der Anschluss 7. Die zuvor beschriebene Buchse 14 weist entlang eines Umlaufes einen Schlitz auf, sodass mögliche Toleranzen im Durchmesser des Gehäusebechers 3 und/oder dem Durchmesser der bereits beschriebenen Ausnehmung 23 ausgeglichen werden können.

Durch die zuvor in Figur 8 beschriebene Keilform im Längsschnitt des Klemmrings 14 kann beim Einpressen des Klemmrings 14 eine gasdichte Verbindung zwischen dem Klemmring 14 und dem Gehäusebecher 3 und dem Klemmring 14 und einer Innenwand der Ausnehmung 23 des Kühlkörpers 5 erreicht werden. Durch die gasdichte Verbindung ist ein guter elektrischer Kontakt zwischen dem Gehäusebecher 3 und dem Kühlkörper 5 über den in diesem Ausführungsbeispiel elektrisch- und wärmeleitfähigen Klemmring 14 hergestellt, der durch die Gasdichtigkeit vor Oxidation geschützt ist.

Figur 10 zeigt ein Ausführungsbeispiel für einen Kühlkörper 5 mit einer Ausnehmung 24. Die Ausnehmung 24 ist - wie zuvor in Figur 6 beschrieben - zylinderförmig ausgebildet. Der Kondensator 1 umfassend den Gehäusebecher 3 und der Anschluss 7 weist einen kleineren Durchmesser als die Ausnehmung 24 auf, sodass der Kondensator 1 sich ohne zusätzliche Einpresskräfte in die Ausnehmung 24 einfügen lässt. Der Gehäusebecher 3 des Kondensators 1 ist in diesem Ausführungsbeispiel vollständig in der Ausnehmung 24 aufgenommen. Der Kondensator 1 ist durch einen Klemmring 17 in der Ausnehmung 24 festgehalten. Der Klemmring 17 weist radial nach außen abweisende Federlaschen 34 und radial nach innen weisende Federlaschen 32 auf. Nach einem Einpressen des Klemmrings 17 entlang der Längsachse 20 drücken die Federlaschen 32, welche radial nach innen weisen, gegen eine Wand des Gehäusebechers 3 und die Federlaschen 34, welche radial nach außen weisen, gegen die Wand der Ausnehmung 24. Der Gehäusebecher 3 steht mit einem Boden der Ausnehmung 24 in wärmeleitfähigem Wirkkontakt. Der Klemmring 17 ist beispielsweise elektrisch leitfähig ausgebildet, sodass mittels des Klemmrings 17 eine elektrische Verbindung zwischen dem Gehäusebecher 3 und dem Kühlkörper 5 über die Wand der Ausnehmung 24 hergestellt ist.

Die Federlaschen 34 erstrecken sich mit einer Richtungskomponente radial nach außen und mit einer Richtungskomponente zu einer Öffnung der Ausnehmung 34 hin. Dadurch kann der Klemmring 17 in die Ausnehmung 24 eingefügt werden. Die zur Öffnung der Ausnehmung 24 hin gerichteten Federlaschen bilden so eine Art Widerhaken, sodass der Klemmring 17 gegen ein Herausbewegen des Klemmrings 17 entlang der Längsachse 20 gesichert ist. Die Federlaschen 32 weisen mit einer Richtungskomponente radial nach innen und mit einer Richtungskomponente zu einem Boden der Ausnehmung 24 hin. Dadurch lässt sich der Gehäusebecher 3 des Kondensators in den Kontaktring 17 einpressen. Der Gehäusebecher 3 des Kondensators ist gegen ein Herausbewegen aus dem Kontaktring 17 und der Ausnehmung 24 wie bereits beschrieben durch die mittels der Federlaschen 32 gebildeten Widerhaken gesichert.

Figur 11 zeigt den in Figur 10 in einer Längsschnittdarstellung dargestellten Kondensator 1 in der Ausnehmung 24 in einer Querschnittdarstellung. Dargestellt ist der Gehäusebecher 3 und der Anschluss 7 des Kondensators 1. Der Klemmring 17 weist mehrere, in diesem Ausführungsbeispiel neun radial nach außen weisende Federlaschen 34 und neun radial nach innen weisende Federlaschen 32 auf.

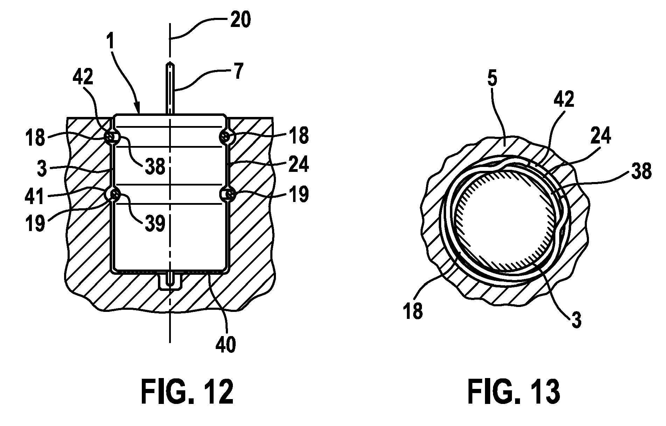

Figur 12 zeigt ein Ausführungsbeispiel für einen Kondensator 1, welcher in einer zylinderförmig ausgebildeten Ausnehmung 24 eines Kühlkörpers 5 angeordnet ist. Die Ausnehmung 24 weist zusätzlich zu der in Figur 10 dargestellten Ausnehmung 24 zwei ringförmig ausgebildete Nuten auf, welche radial umlaufend nach außen ausgebildet sind und die Ausnehmung 24 jeweils entlang eines Tiefenabschnitts entlang der Längsachse 20 radial nach außen erweitern. Der Gehäusebecher 3 des Kondensators 1 weist zwei radial nach innen weisende und umlaufend ausgebildete Nuten, nämlich eine im Bereich des Anschlusses 7 verlaufende Nut 38, und eine entlang des Längserstreckungskondensators 1 zwischen einem Boden des Gehäusebechers 3 und einem Rand des Gehäusebechers angeordnete Nut 39 auf. Der Gehäusebecher 3 des Kondensators 1 ist in diesem Ausführungsbeispiel in der Ausnehmung 24 vollständig aufgenommen. Der Kühlkörper 5 weist eine radial nach außen weisende und ringförmig umlaufende Nut 42 auf, welche entlang der Längsachse 20 der Nut 38 gegenüber angeordnet ist. Der Kühlkörper 5 weist auch eine Nut 41 auf, welche die Ausnehmung 24 radial nach außen erweitert und welche entlang der Längsachse 20 der Nut 39 gegenüberliegend angeordnet ist. Der Gehäusebecher 3 des Kondensators 1 ist in diesem Ausführungsbeispiel mittels eines Klemmrings 18 und eines Klemmrings 19 formschlüssig gegen ein Herausbewegen entlang der Längsachse 20 aus der Ausnehmung 24 gesichert. Die Klemmringe 18 und 19 sind jeweils entlang eines Ringumlaufes wellenförmig ausgebildet, sodass sich entlang des Ringumlaufes ein Ringabschnitt radial nach außen und ein darauf folgender Ringabschnitt radial nach innen erstreckt. Die radial nach innen erstreckenden Ringabschnitte können dabei in die Nut 38 eingreifen, die radial nach außen erstreckenden Ringabschnitte können in die der Nut 38 gegenüberliegende Nut 42 des Kühlkörpers 5 eingreifen.

Der Klemmring 18 greift somit in die Nut 38 des Gehäusebechers und in die Nut 42 des Kühlkörpers 5 ein. Der Klemmring 19 greift auf dieselbe Weise in die Nut 39 des Gehäusebechers 3 und in die Nut 41 des Kühlkörpers 5 ein. Die Klemmringe 18 und 19 können beispielsweise vor einem Einschieben des Kondensators 1 in die Ausnehmung 24 eingefügt sein. Der Kondensator 1 kann dann anschließend in die Nut 24 eingeschoben werden, wobei der Kondensator 1 bei einer Übereinstimmung der Nuten des Kühlkörpers 5 mit den Nuten des Gehäusebechers 3 mit den Klemmringen 18 und 19 in formschlüssigen Wirkeingriff gerät. Die Klemmringe 18 und 19 rasten dann in die Nuten 38 beziehungsweise 39 ein.

Figur 13 zeigt den in Figur 12 bereits als Längsschnitt dargestellten Kondensator 1 in der Ausnehmung 24 in einem Querschnitt. Dargestellt ist der Gehäusebecher 3 und der Anschluss 7 des Kondensators 1. Weiter dargestellt sind die Ausnehmung 24 des Kühlkörpers 5 und der Klemmring 18. Der Klemmring 18 ist beispielsweise elektrisch leitfähig oder zusätzlich wärmeleitfähig ausgebildet. Dadurch kann Wärme im Bereich der durch die Nuten 38 und 39 gebildeten Einschnürungen des Gehäusebechers 3 über den Klemmring 18 und den Klemmring 19 an den Kühlkörper 15 abgeführt werden. Der Gehäusebecher 3 kann auch mittels der Klemmringe 18 und 19 mit dem Kühlkörper 5 elektrisch verbunden sein.

Zusätzlich zu der thermischen Kontaktierung des Gehäusebechers 3 über die Klemmringe 18 und 19 kann ein Boden des Gehäusebechers 3 - wie zuvor in Figur 1 beschrieben - mittels eines Wärmeleitmittels 40 mit einem Boden der Ausnehmung 24 in wärmeleitendem Wirkkontakt stehen.

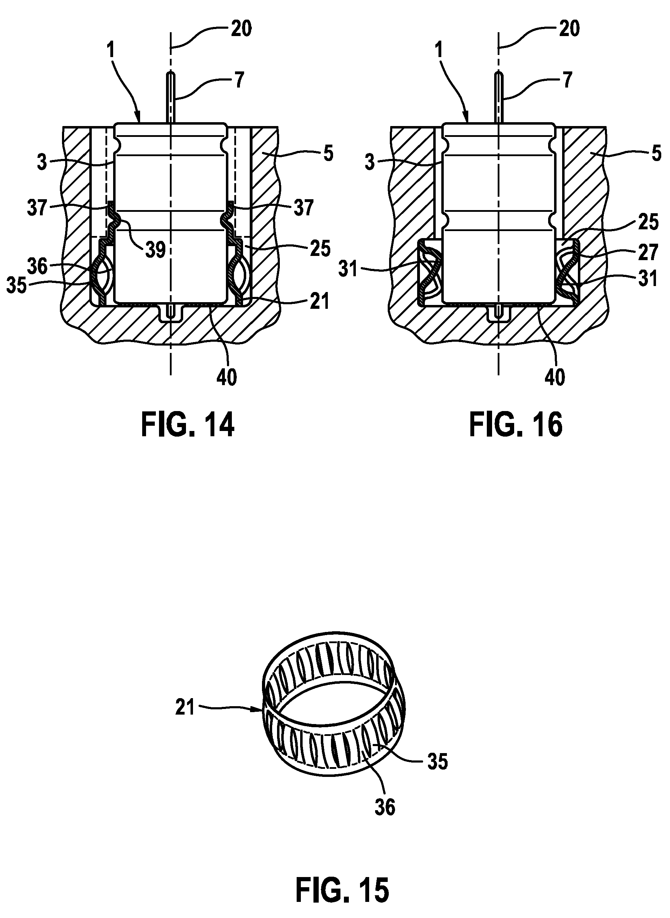

Figur 14 zeigt ein Ausführungsbeispiel für einen Kondensator 1 mit einem Gehäusebecher 3 und einem Anschluss 7. Der Kondensator 1 ist mit dem Gehäusebecher 3 vollständig in eine Ausnehmung 25 des Kühlkörpers 5 angeordnet. Zwischen einer Außenfläche des Gehäusebechers 3 und einer Innenwand der Ausnehmung 25 ist ein Klemmring 21 angeordnet. Der Klemmring 21 weist konvex radial nach außen weisende Federbügel auf und radial nach innen konvex ausgebildete Federbügel auf. Der radial nach außen weisende Federbügel 35 und der radial nach innen weisende Federbügel 36 sind beispielhaft bezeichnet. Der Klemmring 21 ist in Figur 15 in einer Aufsicht dargestellt. Der Klemmring 21 kann vor einem Einsetzen des Kondensators 1 in die Ausnehmung 25 auf den Gehäusebecher 3 des Kondensators 1 aufgeschoben werden. Beispielsweise weist der Klemmring 21 - in Figur 15 nicht dargestellte - Federlaschen 37 auf, welche ausgebildet sind, in die zuvor beschriebene Nut 39 des Gehäusebechers einzugreifen. Dadurch ist nach einem Einrasten der Federlaschen 37 in die Nut 39 der Klemmring 21 entlang der Längsachse 20 gegen ein Verschieben entlang der Längsachse 20 auf dem Gehäusebecher 3 formschlüssig gesichert. Nach dem Aufschieben des Klemmrings 21 auf dem Gehäusebecher 3 kann der Kondensator 1 zusammen mit dem Klemmring 21 in die Ausnehmung 25 eingeführt werden. Der Klemmring 21 kann beispielsweise entlang seines Ringumfanges eine Öffnung aufweisen. Die Ausnehmung 25 kann - gestrichelt dargestellt - entlang einer Tiefenerstreckung einen Bereich aufweisen, welcher einen kleineren Durchmesser aufweist als ein entlang der Tiefenerstreckung benachbarter Bereich der Ausnehmung 25. Der Klemmring 21 kann dann in die Ausnehmung 25 unter radialer Komprimierung eingeführt werden und schnappt dann radial nach außen federnd in den Bereich der Ausnehmung 25 mit größerem Durchmesser ein. Der Kondensator 1 kann dann anschließend in die Ausnehmung 25 eingeführt werden und drückt dann die Federbügel 36 radial nach außen. Die Federlaschen 37 ragen dann in den noch verbleibenden Zwischenraum zwischen dem Gehäusebecher 3 und einer Wand der Ausnehmung 25 in den Bereich mit kleinerem Durchmesser. Die Federlaschen 37 rasten dann in die Ringnut 39 ein und sichern den Kondensator 1 formschlüssig gegen ein Herausbewegen aus der Ausnehmung 25 entlang der Längsachse 20.

Figur 16 zeigt eine Variante für einen Klemmring 27, welcher in dem in Figur 14 bereits beschriebenen Bereich der Ausnehmung 25 mit größerem Durchmesser angeordnet ist. Der Klemmring 27 weist radial konvex nach innen ausgebildete Federbügel 31 auf. Die Federbügel 31 sind - ähnlich wie die Federbügel 35 in Figur 15 - in Umfangsrichtung aufeinanderfolgend angeordnet.

Anders als in Figur 15 sind in Umfangsrichtung unmittelbar aufeinanderfolgende Federbügel derart ausgeformt, dass die unmittelbar aufeinanderfolgenden Federbügel jeweils an zueinander verschiedenen Berührungsstellen entlang der Längsachse 20 den Gehäusebecher 3 federnd kontaktieren. Dadurch wird eine auf den Gehäusebecher 3 wirkende Anpresskraft auf einer Fläche des Gehäusebechers 3 verteilt. Weiter vorteilhaft wird eine Einpresskraft beim Einführen des Kondensators in die Aussparung in zeitlich zueinander versetzte Teilkräfte aufgeteilt.

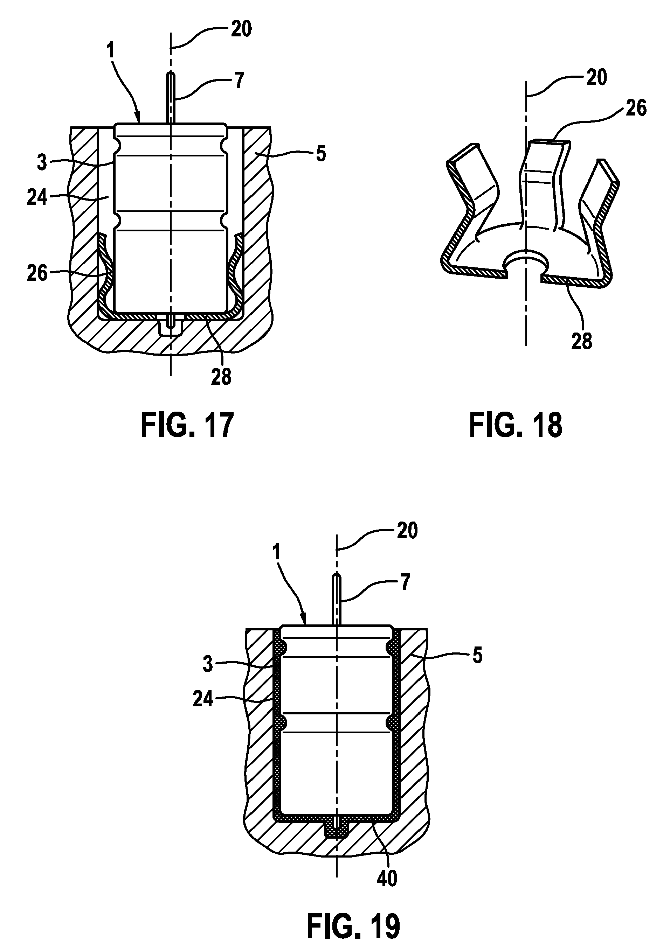

Figur 17 zeigt eine Ausführungsform für eine Verbindung des Kondensators 1 umfassend den Gehäusebecher 3 und den Anschluss 7 mit einem Kühlkörper 5, bei der der Kondensator 1 wenigstens entlang eines Längsabschnitts entlang der Längsachse 20 mit dem Gehäusebecher 3 in einer Tellerfeder 28 aufgenommen ist. Der Kondensator 1 ist zusammen mit der Tellerfeder 28 in der Ausnehmung 24 aufgenommen.

Ein Boden des Gehäusebechers berührt dabei einen Boden der Tellerfeder 28. Die Tellerfeder 28 weist von dem Boden der Tellerfeder 28 sich senkrecht erstreckende Federlaschen 26 auf, welche sich jeweils entlang der Längsachse 20 erstrecken. Die Federlaschen 26 weisen jeweils einen konvex radial nach innen weisenden Längsabschnitt auf, welcher ausgebildet ist, den Gehäusebecher 3 federnd zu kontaktieren. Die Federlaschen 26 erstrecken sich jeweils im Bereich eines Endes radial nach außen, sodass die Federlaschen 26 im Bereich des Endes eine Wand des Kühlkörpers 5 im Bereich der Ausnehmung 24 kontaktieren können. Die Federlaschen 26 drücken dabei mit dem radial nach außen federnden Endabschnitt gegen die Wand der Ausnehmung 24 und mit dem radial nach innen weisenden Längsabschnitt gegen den Gehäusebecher 3.

Figur 18 zeigt die in Figur 18 dargestellte Tellerfeder 28 in einem Teilschnitt in einer Aufsicht.

Figur 19 zeigt ein Ausführungsbeispiel für einen Kondensator 1 umfassend einen Gehäusebecher 3 und einen Anschluss 7, welcher in einer Ausnehmung 24 angeordnet ist. Die Ausnehmung 24 ist zylinderförmig ausgebildet. Der Gehäusebecher 3 des Kondensators 1 ist in diesem Ausführungsbeispiel mittels eines elektrisch leitfähigen und wärmeleitfähigen Klebstoffs 40 in die Ausnehmung 24 eingeklebt. Der elektrisch leitfähige Klebstoff kann dazu beispielsweise elektrisch leitfähige Partikel aufweisen, deren Anteil und Partikeldurchmesser im Klebstoff derart ausgebildet ist, dass zwischen dem Gehäusebecher 3 und dem Kühlkörper 5 im Bereich der Ausnehmung 24 eine ununterbrochen elektrisch und wärmeleitfähige Kette von elektrisch leitfähigen Partikeln gebildet ist, wobei die elektrisch leitfähigen Partikel als Bestandteil der Kette einander berührend kontaktieren. Durch die berührende Kontaktierung ist ein galvanischer elektrischer Kontakt zwischen den einander berührenden Partikeln gebildet. Die Partikel sind beispielsweise Silberpartikel und/oder Kohlenstoffpartikel.

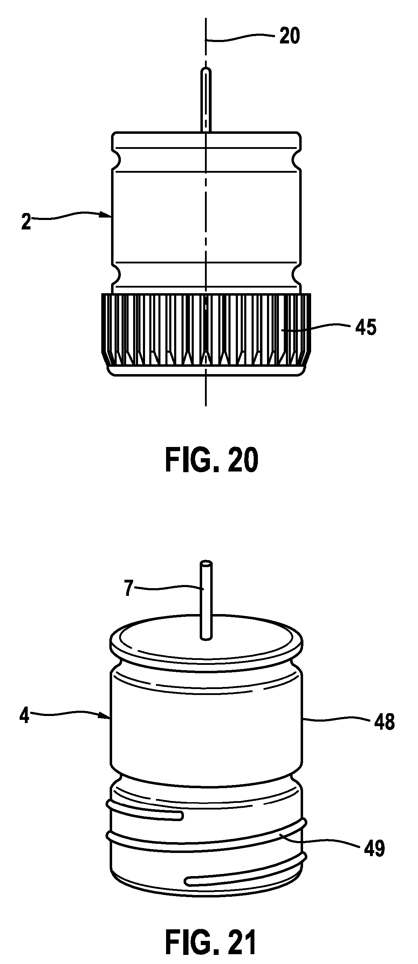

Figur 20 zeigt einen Elektrolytkondensator 2. Der Elektrolytkondensator 2 weist einen Gehäusebecher 47 und einen positiven Anschluss 7 auf. Der Gehäusebecher 47 weist einen Bereich auf, an dem sich längs in Richtung einer Längsachse 20 erstreckende und radial abweisende Rippen ausgebildet sind.

Die Rippe 45 ist beispielhaft bezeichnet. Die Rippen sind jeweils in dem Gehäusebecher 47 - beispielsweise mittel Prägen oder bei einem Fließpressen des Gehäusebechers 47 - ausgeformt. Die Rippen sind jeweils ausgebildet, beim Einpressen in eine beispielsweise zylinderförmige Ausnehmung eines Kühlkörpers radial nach innen einzufedern und/oder radial nach innen plastisch verformt zu werden. Dadurch ist der Elektrolytkondensator in der Ausnehmung festgehalten und kontaktiert zusätzlich elektrisch und wärmeleitend den Kühlkörper. Die Rippen können dazu beispielsweise wenigstens eine radial abweisende Schneide oder Nadel aufweisen, welche ausgebildet ist, eine Oxidschicht einer Wand der Ausnehmung beim Einpressen des Elektrolytkondensators in die Ausnehmung zu durchbrechen und den Kühlkörper elektrisch zu kontaktieren.

Figur 21 zeigt einen Elektrolytkondensator 4. Der Elektrolytkondensator 4 weist einen Gehäusebecher 48 und einen positiven Anschluss 7 auf. Der Gehäusebecher 48 bildet in diesem Ausführungsbeispiel einen negativen Anschluss des Elektrolytkondensators 4.

Der Gehäusebecher 48 weist einen Längsabschnitt auf, an dem ein Gewinde ausgebildet ist. Dazu ist an den Gehäusebecher 48 ein sich ein radial nach außen erstreckender und radial abweisender Gewindegang 49 ausgebildet. Der Elektrolytkondensator 4 kann mit dem Gewindeabschnitt in eine entsprechend ausgebildete Ausnehmung eines Kühlkörpers eingeschraubt werden. Der Kühlkörper kann dazu in der Ausnehmung ein entsprechendes Gegengewinde aufweisen.

## Patentansprüche

1. Kondensator (1, 2, 4), insbesondere Elektrolytkondensator, mit einem Gehäusebecher (3, 47, 48), wobei der Kondensator (1, 2, 4) mit einem Kühlkörper (5) derart verbunden ist, dass von dem Kondensator (1, 2, 4) erzeugte Wärme an den Kühlkörper (5) abgegeben werden kann, wobei der Kühlkörper (5) eine Ausnehmung (8, 22, 23, 24, 25) aufweist, in welcher der Kondensator (1, 2, 4) wenigstens teilweise aufgenommen ist und der Gehäusebecher (3, 47, 48) in der Ausnehmung (8, 22, 23, 24, 25) mit dem Kühlkörper (5) wenigstens wärmeleitend verbunden ist, wobei der Kondensator (1, 2, 4) in die Ausnehmung derart eingepresst ist, dass eine Wand der Ausnehmung (8, 22, 23, 24, 25) von wenigstens einem Bereich des Gehäusebechers (3, 47, 48) wärmeleitend oder zusätzlich elektrisch kontaktiert ist, **dadurch gekennzeichnet, dass** der Kondensator (2) wenigstens auf einem zum Einpressen ausgebildeten Abschnitt radial abweisende Rippen (45) aufweist, welche ausgebildet sind, den Kühlkörper (5) im Bereich der Ausnehmung (8, 22, 23, 24, 25) wärmeleitend oder zusätzlich elektrisch zu kontaktieren und den Kondensator (2) in der Ausnehmung (8, 22, 23, 24, 25) festzuklemmen.

2. Kondensator (1, 2, 4) nach Anspruch 1, **dadurch gekennzeichnet, dass** der Kühlkörper (5) elektrisch leitfähig ausgebildet ist und der Kondensator (1, 2, 4) insbesondere der Gehäusebecher (3, 47, 48) in der Ausnehmung (8, 22, 23, 24, 25) mit dem Kühlkörper (5) elektrisch verbunden ist.

3. Kondensator (1, 2, 4) nach Anspruch 1 oder 2, **dadurch gekennzeichnet, dass** sich die Rippen (45) entlang der Längsachse erstrecken.

4. Kondensator (1, 2, 4) nach einem der vorhergehenden Ansprüche, **dadurch gekennzeichnet, dass** der Kondensator federnd in der Ausnehmung (8, 22, 23, 24, 25) festgeklemmt ist.

5. Kondensator (1, 2, 4) nach einem der vorhergehenden Ansprüche, **dadurch gekennzeichnet, dass** der Kühlkörper (5) in der Ausnehmung (8) ausgeformte Rippen (10, 11) aufweist, welche ausgebildet sind, den Gehäusebecher festzuhalten.

6. Kondensator (1) nach einem der vorhergehenden Ansprüche, **dadurch gekennzeichnet, dass** der Kondensator mittels eines Klemmringes (14, 15, 16, 17, 18, 19, 21, 27) in der Ausnehmung (8, 22, 23, 24, 25) festgehalten ist.

7. Kondensator (1) nach Anspruch 6, **dadurch gekennzeichnet, dass** der Klemmring (14) auf einer Mantelfläche des Klemmrings (14) zu einem Ende hin verjüngt ausgebildet ist.

8. Kondensator (1) nach Anspruch 6, **dadurch gekennzeichnet, dass** der Klemmring (18, 19) in Umfangsrichtung wellenförmig ausgebildet ist, und der Gehäusebecher (3) wenigstens auf einem Umfangsabschnitt eine Nut (38, 39) aufweist, welche ausgebildet ist, den Klemmring (18, 19) wenigstens teilweise aufzunehmen, so dass der Klemmring (18, 19) in die Nut (38, 39) eingreifen kann.

9. Kondensator (1) nach einem der Ansprüche 6 bis 8, **dadurch gekennzeichnet, dass** der Klemmring (17) wenigstens eine Federlasche (32, 34) aufweist, welche ausgebildet ist, gegen den Gehäusebecher (3) und/oder eine Wand der Ausnehmung (24) federnd abzustützen.

10. Kondensator (1, 2, 4) nach einem der vorhergehenden Ansprüche, **dadurch gekennzeichnet, dass** der Gehäusebecher (3) in der Ausnehmung (8, 24, 25) mit einem mindestens wärmeleitfähigen oder zusätzlich elektrisch leitfähigen Klebstoff (40) in die Ausnehmung (24) eingeklebt ist.

11. Kondensator (1, 2, 4) nach einem der vorhergehenden Ansprüche, **dadurch gekennzeichnet, dass** der Gehäusebecher (48) eine Gewinde (49) aufweist und in die Aussparung eingeschraubt werden kann.

## Claims

1. Capacitor (1, 2, 4), in particular electrolytic capacitor, comprising a housing cup (3, 47, 48), wherein the capacitor (1, 2, 4) is connected to a heat sink (5) in such a way that heat which is generated by the capacitor (1, 2, 4) can be output to the heat sink (5), wherein the heat sink (5) has a recess (8, 22, 23, 24, 25) in which the capacitor (1, 2, 4) is at least partially accommodated, and the housing cup (3, 47, 48) in the recess (8, 22, 23, 24, 25) is at least thermally conductivity connected to the heat sink (5), wherein the capacitor (1, 2, 4) is pressed into the recess in such a way that at least one region of the housing cup (3, 47, 48) makes thermally conductive or additionally electrical contact with a wall of the recess (8, 22, 23, 24, 25), **characterized in that** the capacitor (2) has radially outwardly extending ribs (45) at least on a section which is designed to be pressed in, the said ribs being designed to make thermally conductive or additionally electrical contact with the heat sink (5) in the region of the recess (8, 22, 23, 24, 25) and to firmly clamp the capacitor (2) in the recess (8, 22, 23, 24, 25).

2. Capacitor (1, 2, 4) according to Claim 1, **characterized in that** the heat sink (5) is of electrically conductive design, and the capacitor (1, 2, 4), in particular the housing cup (3, 47, 48) in the recess (8, 22, 23, 24, 25), is electrically connected to the heat sink (5).

3. Capacitor (1, 2, 4) according to Claim 1 or 2, **characterized in that** the ribs (45) extend along the longitudinal axis.

4. Capacitor (1, 2, 4) according to one of the preceding claims, **characterized in that** the capacitor is firmly clamped in the recess (8, 22, 23, 24, 25) with a spring action.

5. Capacitor (1, 2, 4) according to one of the preceding claims, **characterized in that** the heat sink (5) has ribs (10, 11) which are formed in the recess (8) and which are designed to firmly hold the housing cup.

6. Capacitor (1) according to one of the preceding claims, **characterized in that** the capacitor is firmly held in the recess (8, 22, 23, 24, 25) by means of a clamping ring (14, 15, 16, 17, 18, 19, 21, 27).

7. Capacitor (1) according to Claim 6, **characterized in that** the clamping ring (14) is designed to taper towards one end on a casing surface of the clamping ring (14).

8. Capacitor (1) according to Claim 6, **characterized in that** the clamping ring (18, 19) is of undulating design in the circumferential direction, and the housing cup (3) has a slot (38, 39) at least on a circumferential section, the said slot being designed to at least partially receive the clamping ring (18, 19), so that the clamping ring (18, 19) can engage into the slot (38, 39).

9. Capacitor (1) according to one of Claims 6 to 8, **characterized in that** the clamping ring (17) has at least one spring lug (32, 34) which is designed to be supported with a spring action against the housing cup (3) and/or a wall of the recess (24).

10. Capacitor (1, 2, 4) according to one of the preceding claims, **characterized in that** the housing cup (3) in the recess (8, 24, 25) is adhesively bonded into the recess (24) by means of an at least thermally conductive or additionally electrically conductive adhesive (40).

11. Capacitor (1, 2, 4) according to one of the preceding claims, **characterized in that** the housing cup (48) has a thread (49) and can be screwed into the cutout.

## Revendications

1. Condensateur (1, 2, 4), notamment condensateur électrolytique comportant un boîtier de logement (3, 47, 48), dans lequel le condensateur (1, 2, 4) est relié à un corps de refroidissement (5) de manière à ce que la chaleur dégagée par le condensateur (1, 2, 4) puisse être transférée au corps de refroidissement (5), dans lequel le corps de refroidissement (5) présente un évidement (8, 22, 23, 24, 25) dans lequel le condensateur (1, 2, 4) est au moins partiellement reçu et le boîtier de logement (3, 47, 48) est relié au moins de façon thermiquement conductrice, dans l'évidement (8, 22, 23, 24, 25), au corps de refroidissement (5), dans lequel le condensateur (1, 2, 4) est inséré dans l'évidement de manière à ce qu'au moins une région du boîtier de logement (3, 47, 48) soit mise en contact thermiquement conducteur ou également électrique avec une paroi de l'évidement (8, 22, 23, 24, 25), **caractérisé en ce que** le condensateur (2) présente des nervures (45) s'écartant radialement sur au moins une section formée à des fins d'insertion, lesquelles nervures sont réalisées de manière à établir un contact thermiquement conducteur ou également électrique avec le corps de refroidissement (5) dans la région de l'évidement (8, 22, 23, 24, 25) et pour immobiliser le condensateur (2) dans l'évidement (8, 22, 23, 24, 25).

2. Condensateur (1, 2, 4) selon la revendication 1, **caractérisé en ce que** le corps de refroidissement (5) est réalisé de manière à être électriquement conducteur et **en ce que** le condensateur (1, 2, 4), notamment le boîtier de logement (3, 47, 47), est relié électriquement au corps de refroidissement (5) dans l'évidement (8, 22, 23, 24, 25).

3. Condensateur (1, 2, 4) selon la revendication 1 ou 2, **caractérisé en ce que** les nervures (45) s'étendent le long de l'axe longitudinal.

4. Condensateur (1, 2, 4) selon l'une quelconque des revendications précédentes, **caractérisé en ce que** le condensateur est serré élastiquement dans l'évidement (8, 22, 23, 24, 25).

5. Condensateur (1, 2, 4) selon l'une quelconque des revendications précédentes, **caractérisé en ce que** le corps de refroidissement (5) dans l'évidement (8) présente des nervures (10, 11) façonnées qui sont conçues pour maintenir le boîtier de logement.

6. Condensateur (1) selon l'une quelconque des revendications précédentes, **caractérisé en ce que** le condensateur est maintenu au moyen d'un anneau de serrage (14, 15, 16, 17, 18, 19, 21, 27) dans l'évidement (8, 22, 23, 24, 25).

7. Condensateur (1) selon la revendication 6, **caractérisé en ce que** l'anneau de serrage (14) est réalisé de manière biseautée vers une extrémité sur une surface externe de l'anneau de serrage (14).

8. Condensateur (1) selon la revendication 6, **caractérisé en ce que** l'anneau de serrage (18, 19) est réalisé de manière à présenter une forme ondulée dans la direction circonférentielle et **en ce que** le boîtier de logement (3) présente au moins une rainure (38, 39) sur une partie circonférentielle, qui est réalisée de manière à recevoir au moins partiellement l'anneau de serrage (18, 19) afin que l'anneau de serrage (18, 19) puisse s'engager dans la rainure (38, 39).

9. Condensateur (1) selon l'une quelconque des revendications 6 à 8, **caractérisé en ce que** l'anneau de serrage (17) présente au moins une patte élastique (32, 34) qui est réalisée de manière à prendre appui élastiquement contre le boîtier de logement (3) et/ou une paroi de l'évidement (24).

10. Condensateur (1, 2, 4) selon l'une quelconque des revendications précédentes, **caractérisé en ce que** le boîtier de logement (3) présent dans l'évidement (8, 24, 25) est collé dans l'évidement (24) au moyen d'au moins un adhésif (40) thermiquement conducteur ou également électriquement conducteur.

11. Condensateur (1, 2, 4) selon l'une quelconque des revendications précédentes, **caractérisé en ce que** le boîtier de logement (48) présente un filetage (49) et peut être vissé dans l'évidement.
